## Europäisches Patentamt

## European Patent Office

## Office européen des brevets

(11) Veröffentlichungsnummer: **0 122 450**
**A1**

# EUROPÄISCHE PATENTANMELDUNG

(21) Anmeldenummer: 84102660.2

(51) Int. Cl.³: **C 03 B 37/06**

(22) Anmeldetag: 12.03.84

(30) Priorität: 19.03.83 DE 3309990

(43) Veröffentlichungstag der Anmeldung:
24.10.84 Patentblatt 84/43

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Muschelknautz, Edgar, Prof. Dr.
Carl-Rumpff-Strasse 33
D-5090 Leverkusen 1(DE)

(72) Erfinder: Rink, Norbert, Dr.
Frixheimerstrasse 60
D-4049 Rommerskirchen 1(DE)

(72) Erfinder: Chalupka, Georg
Carl-Leverkus-Strasse 1a
D-5068 Odentahl(DE)

(54) Verfahren und Vorrichtung zur Zerteilung von Schmelzen.

(57) Es wird ein Verfahren zur Zerteilung von Schmelzen in Blasdüsen, wobei die Schmelze (3) aus einem Schmelzereservoir unter der Saugwirkung der Blasdüse (6, 7, 70) von der Schmelzoberfläche abgehoben und unter der Wirkung von im wesentlichen entgegen der Schwerkraft strömendem Gas zerteilt wird, beschrieben, bei dem die Schmelze (3) in einem Steigkanal (4) angehoben wird, die Schmelze durch eine Vielzahl von an der Steigkanaloberseite vorgesehenen, nebeneinander angeordneten Öffnungen (5) in eine Vielzahl von Schmelzeström aufgeteilt und in die Ziehdüse(2) eingezogen wird, wobei die Druckdifferenz zum Anheben der Schmelze im Steigkanal (4) und Einziehen in die Ziehdüse (2) durch die zwischen Steigkanaloberseite und Ziehdüsenunterseite bewirkte Einlaufströmung in die Ziehdüse erzeugt wird.

FIG. 1

Croydon Printing Company Ltd.

0122450

BAYER AKTIENGESELLSCHAFT      5090 Leverkusen, Bayerwerk

Konzernverwaltung RP            18. März 1983
Patentabteilung                Dp/Kü-c


Verfahren und Vorrichtung zur Zerteilung von Schmelzen
_____


Die vorliegende Erfindung betrifft ein Verfahren zur Zerteilung von Schmelzen in Blasdüsen, wobei die Blasdüse entgegen der Schwerkraft wirkt.

Der Wunsch der Technik, eine Zerfaserung entgegen der Schwerkraft vorzunehmen, ist sehr alt. Beim Zerfasern entgegen der Schwerkraft kann die Schmelze nämlich direkt von der Schmelzeoberfläche abgehoben werden, ohne daß Schmelzeausflußöffnungen im Boden des Schmelzeofens, bzw. Vorherdes, vorgesehen werden müssen.

Insbesondere bei Betriebsstörungen und Betriebsstillständen entfällt damit der Aufwand, nach unten gerichtete Ausflußöffnungen zu verschließen und beim Wiederanfahren des Zerfaserungsprozesses erneut zu öffnen. Ferner wird die Schmelze aus einem größeren Schmelzereservoir entnommen und sollte daher eine größere Homogenität aufweisen. Schmelzeverluste werden vermieden, da nur so viel Schmelze aus dem Ofen bzw. Vorherd entnommen wird, wie von der Zerfaserungseinrichtung von der Schmelze abgehoben wird.


Le A 22 071- Ausland

Insbesondere bei der Zerfaserung nach dem Düsenblasverfahren ist ein hochteperaturbeständiger Tiegel notwendig, indem die aus dem Schmelzofen entnommene Schmelze in eine Vielzahl von im Boden des Tiegels vorgesehenen Durchtrittsöffnungen in eine Vielzahl von einzelnen Schmelzeströmen bzw. Schmelzefäden aufgeteilt wird, die in die Ziehdüse eingeführt werden und dort zerfasert werden. Als Material für den Schmelzetiegel konnten bisher Platin bzw. Platinrhodiumlegierungen noch nicht ersetzt werden. Der Wunsch nach Zerfaserung entgegen der Schwerkraft resultiert auch aus der Vorstellung, daß der Schmelzetiegel entfallen kann. Die Zerfaserung von Gesteinsschmelzen, die im energetisch günstigen Kupolofen erschmolzen wurden, war nach dem Düsenblasverfahren schon deswegen nicht möglich, weil der Eisenoxidgehalt von Gesteinsschmelzen im Kupolofen teilweise reduziert wurde und das in der Schmelze vorliegende metallische Eisen mit dem Platin des Tiegels legierte.

Das Abheben der Schmelze von der Schmelzeoberfläche des Ofens bzw. Vorherdes durch die Zerfaserungseinrichtung bietet jedoch eine Reihe besonderer Schwierigkeiten, die insbesondere dadurch bedingt sind, das die Schmelzeoberfläche gegen die Zerfaserungseinrichtung nur unzureichend thermisch isoliert werden konnte. Die Vorschläge des Standes der Technik zur Zerfaserung entgegen der Schwerkraft, wie sie z.B. in den Deutschen Patentschriften 731 087 und 1 213 579 offenbart sind, konnten nicht zur technischen Anwendung führen, da die Probleme der thermischen Isolierung der Schmelzeober-

Le A 22 071

fläche entweder nicht gelöst wurden, oder zu derart aufwendigen Lösungen führten, daß diese im Betrieb nicht beherrschbar sind.

Die vorliegende Erfindung stellt nun eine technisch sehr einfache Lösung für die Zerfaserung entgegen der Schwerkraft zur Verfügung, die alle Vorteile einer solchen Zerfaserung bietet, wobei auf eine Art "Schmelzetiegel" nicht vollständig verzichtet wird.

Gegenstand der vorliegenden Erfindung ist nun ein Verfahren zur Zerteilung von Schmelzen in Blasdüsen, wobei die Schmelze aus einem Schmelzereservoir unter der Saugwirkung der Blasdüse von der Schmelzeoberfläche abgehoben und unter der Wirkung von im wesentlichen entgegen der Schwerkraft strömendem Gas zerteilt wird, das dadurch gekennzeichnet ist, daß die Schmelze in einem Steigkanal von der Schmelzeoberfläche hochgehoben wird, die Schmelze durch eine Vielzahl von an der Steigkanaloberseite vorgesehenen, nebeneinander angeordneten Öffnungen in eine Vielzahl von Schmelzeströmen aufgeteilt und in die Ziehdüse eingesaugt wird, wobei die Druckdifferenz zum Anheben der Schmelze im Steigkanal und Einsaugen in die Ziehdüse durch eine zwischen Steigkanaloberseite und Ziehdüse bewirkte Einlaufgasströmung in die Ziehdüse erzeugt wird.

Um der Kühlwirkung der Einlaufgasströmung auf die Steigkanaloberseite entgegen zu wirken, wird die Steigkanaloberseite vorzugsweise beheizt. Die Beheizung kann durch

Le A 22 071

direkte elektrische Beheizung erfolgen. Vorzugsweise wird die Steigkanaloberseite jedoch durch aus dem Schmelzereservoir, das z.B. als gasbeheizter Vorherd ausgebildet sein kann, in unmittelbarer Nähe der Steigkanaloberseite ausströmende heiße Flammengase beheizt.

Das erfindungsgemäße Verfahren findet insbesondere Anwendung bei der Zerfaserung von Mineralschmelzen zur Herstellung von Mineralwolle. Der Steigkanal ist daher zweckmäßig aus Platin, bzw. Platinrhodiumlegierungen, gefertigt. Da an den Steigkanal weder besondere mechanische noch thermische Stabilitätsanforderungen gestellt werden müssen, kann dieser aus relativ dünnem Blech gefertigt sein, so daß der konstruktive und investive Aufwand, der bei üblichen Düsenblasverfahren an den Tiegel gestellt werden muß, wesentlich reduziert wird. Das Risiko der Kontaminierung des wertvollen Platin bzw. der Platinrhodiumlegierungen mit metallischem Eisen bei der Zerfaserung von im Kupolofen erschmolzenen Gesteinsschmelzen ist dadurch ausgeschaltet, daß sich noch in der Schmelze befindliche Eisenteilchen am Boden des Vorherdes absetzen.

Die Saughöhe des Steigkanals beträgt zweckmäßig zwischen 50 und 200 mm, bevorzugt, zwischen 70 und 150 mm.

Erfindungsgemäß kann der Schmelzereservoirbehälter, bzw. der Vorherd, nach oben vollständig abgedeckt sein, wobei lediglich Öffnungen zur Einführung des Steig-

Le A 22 071

kanals vorgesehen sind. Die thermische Isolierung der Schmelze gegen die Ziehdüse und die Einlaufströmung in die Ziehdüse sind damit auf einfache Weise gewährleistet.

Als Ziehdüsen können übliche, beim Düsenblasverfahren eingesetzte Ziehdüsen, eingesetzt werden, sofern diese mit der Einlaufströmung eine hinreichende Druckdifferenz zur Förderung der Schmelze von der Schmelzeoberfläche des Reservoirs in die Ziehdüse zur Verfügung stellen. Eine solche Ziehdüse ist z.B. in der Europäischen Offenlegungsschrift 389 89 offenbart. Bevorzugt werden Überschalldüsen eingesetzt, bei denen sich im engsten Querschnitt des Ziehdüseneinlaufs der kritische Druck von 0,528 des Umgebungsdrucks ausbildet. Die Überschallströmung in der Ziehdüse wird vorzugsweise durch Treibstrahldüsen erzeugt, wobei die Treibstrahldüsen vorzugsweise in möglichst kurzem Abstand von der Ziehdüsenunterkante in die Ziehdüse münden. Die Einlaufströmung in die Ziehdüse soll ferner eine Aufspaltung der Schmelzeströme in eine Vielzahl von Sekundärfäden bewirken. Im Einlaufteil der Ziehdüsen soll daher vorzugsweise ein Druckabfall von mindestens 0,3 bar auf einer Länge von maximal 0,5 mm erzeugt werden.

Die Erfindung wird nachfolgend anhand der Figuren bezüglich weiterer Einzelheiten beschrieben:

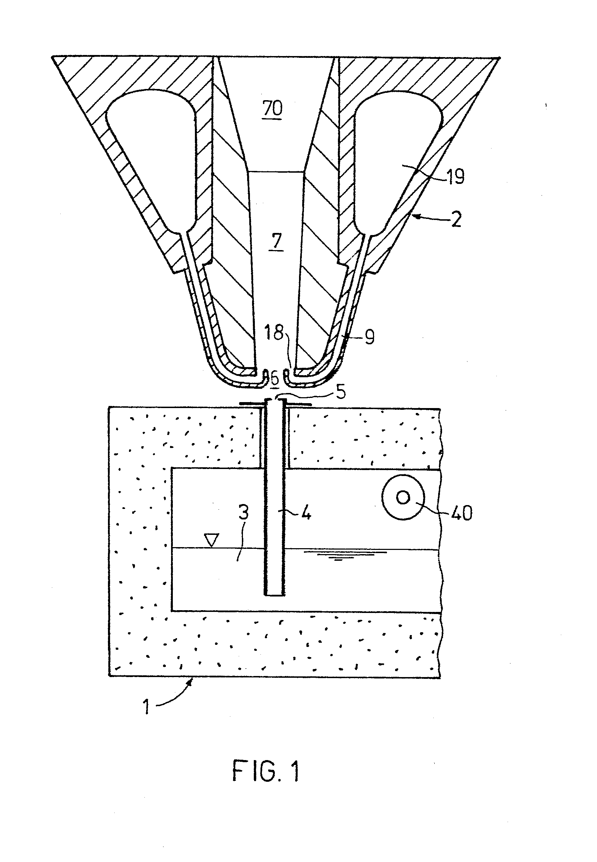

Fig. 1 zeigt im Querschnitt einen Vorherdabschnitt 1, der die Mineralschmelze 3 enthält. Der senkrecht zur Zeichnungsebene ausgedehnte Steigkanal 4 taucht an

Le A 22 071

seinem unteren Ende in die Schmelze ein. Am oberen Ende sind eine Vielzahl von nebeneinander angeordneten Schmelzeaustrittsöffnungen 5 vorgesehen. Der Vorherd 1 weist ferner Gasbrenner 40 zur Beheizung der Schmelze 3 auf. Oberhalb des Vorherdes 1 ist die Ziehdüse 2 so angeordnet, daß die Achsen der Schmelzeaustrittsöffnungen 5 in der Mittelebene des senkrecht zur Zeichnungsebene schlitzförmig ausgebildeten Einlaufteils 6 liegen. Beidseitig des Einlaufteils 6 treten parallel zur Ziehdüsenmittelebene beidseitig Treibstrahldüsen 18 in die Ziehdüse ein, wobei die Treibstrahldüsen 18 durch Treibgaszufuhrleitungen 9 gespeist werden, die mit primären Treibgasleitungen 19 verbunden sind.

In der gezeigten bevorzugten Ausführungsform befindet sich oberhalb des Einlaufteils 6 ein Ausziehteil 7, in dem eine Überschallgasströmung aufrecht erhalten wird. Oberhalb des Ausziehteils 7 ist ein Unterschalldiffusor 70 zur Reduktion der im Ausziehteil 7 gebildeten Mineralfaser/Gas-Dispersion vorgesehen.

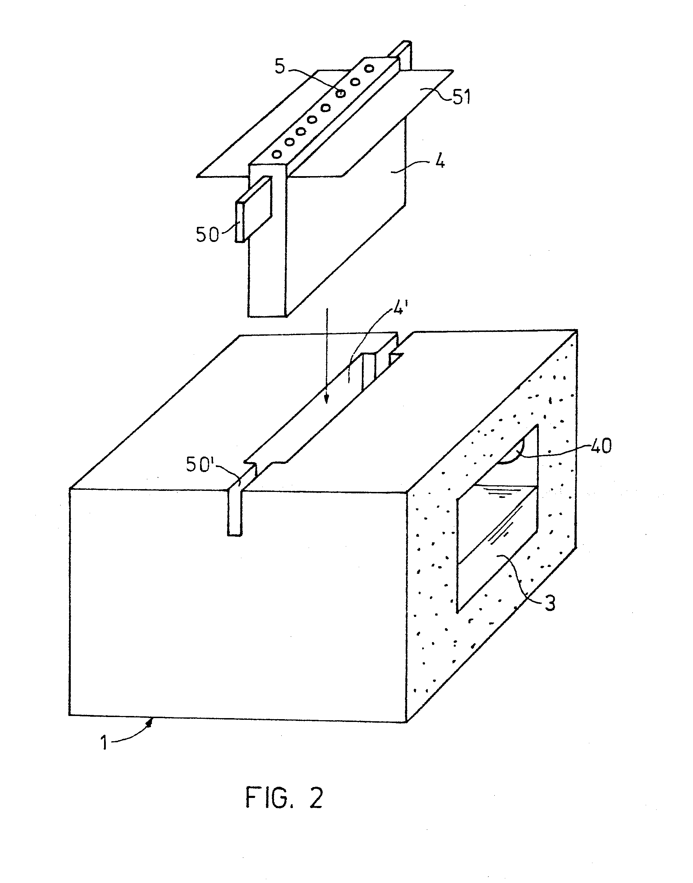

Fig. 2 zeigt den Vorherdabschnitt 1 und Steigrohr 4 aus Fig. 1 in perspektivischer Ansicht. Dabei bezeichnen gleiche Ziffern gleiche Elemente. In der Abdeckung des Vorherdes ist eine Öffnung 4' für die Aufnahme des Steigkanals 4 vorgesehen. Der Steigkanal 4 weist seitliche Stromanschlußfahnen 50 auf, die durch entsprechende Schlitze 50' den Vorherd 1 seitlich überragen. Der

Le A 22 071

Steigkanal 4 weist ferner seitliche Auflagebleche 51 auf, die auf der Abdeckung des Vorherdes 1 aufliegen und mit denen der Steigkanal 4 auf dem Vorherd befestigt wird.

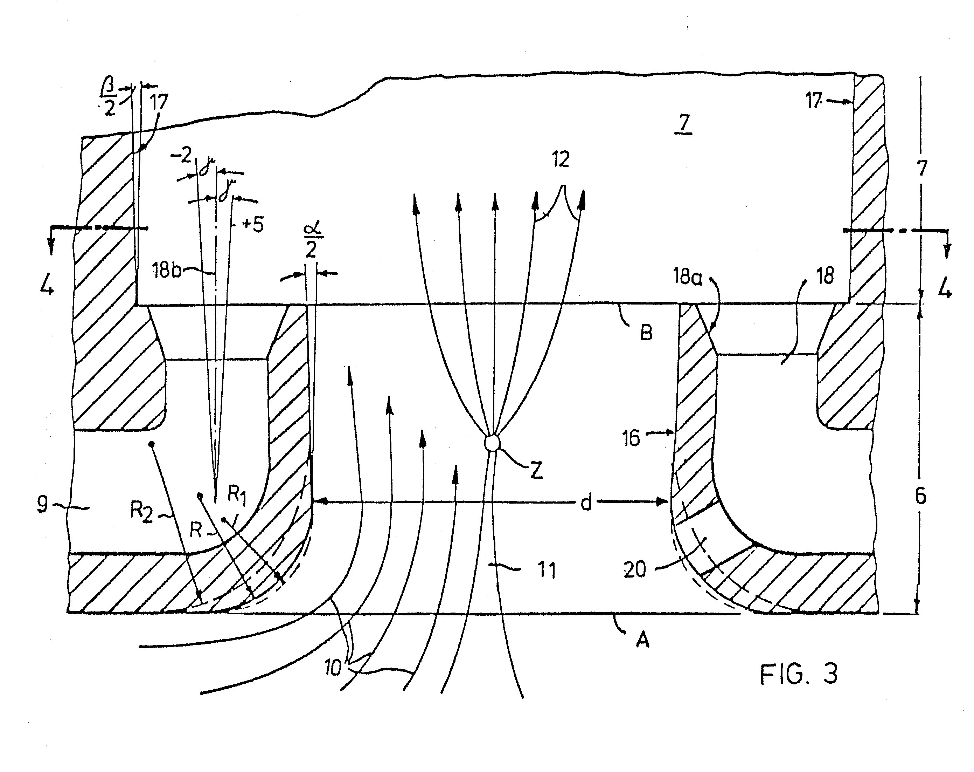

Fig. 3 zeigt die besonders bevorzugte Ausgestaltung eines Details aus Figur 1. Es ist ein Querschnitt durch eine schlitzförmige erfindungsgemäße Ziehdüse dargestellt. Beginnend von der Ebene A ist die Einlaufkontur 16 der Ziehdüse zunächst durch den konvergierenden Teil mit dem Radius R, der zwischen den Radien $R_1$ = 25 % und $R_2$ = 40 % des engsten Querschnitts der Ziehdüse, der in der Figur mit d bezeichnet ist, liegen soll. Der weitere Verlauf der Kontur 16 ist leicht divergent, wobei die Kontur zu einer Parallelen zur Ziehdüsenachse bzw. -mittelebene bis zu einem Winkel von $\frac{\alpha}{2}$ = 1° geneigt ist.

In der Ebene B erweitert sich der Querschnitt der Ziehdüse zum Auszieh teil. Die Begrenzungswand 17 des Auszieh teils ist um einen Winkel ß/2 von 0,5 bis 1,2° gegen eine Parallele zur Ziehdüsenachse bzw. -mittelebene geneigt.

In der Ebene B münden ferner die Treibstrahldüsen 18 in den Auszieh teil 7 ein. Die Treibstrahldüsenachse 18 b ist parallel zur Ziehdüsenachse gezeichnet. Sie kann um einen Winkel $\gamma$ von +5° bis -2° gegen die Ziehdüsenachse bzw. Mittelebene geneigt sein. Ferner ist ein Schmelzestrom 11 eingezeichnet, der am Zerfaserungspunkt

Le A 22 071

Z in eine Vielzahl von Sekundärfäden 12 aufspaltet.
Mit 10 sind die Stromlinien der Einlaufströmung bezeichnet.

Ferner sind in die Figuren noch Querstrahldüsen 20 eingezeichnet, aus denen Gasstrahlen zur Erhöhung des Druckgefälles
im Düseneinlauf austreten, dieaus der Druckgasleitung 9 gespeitst
werden.

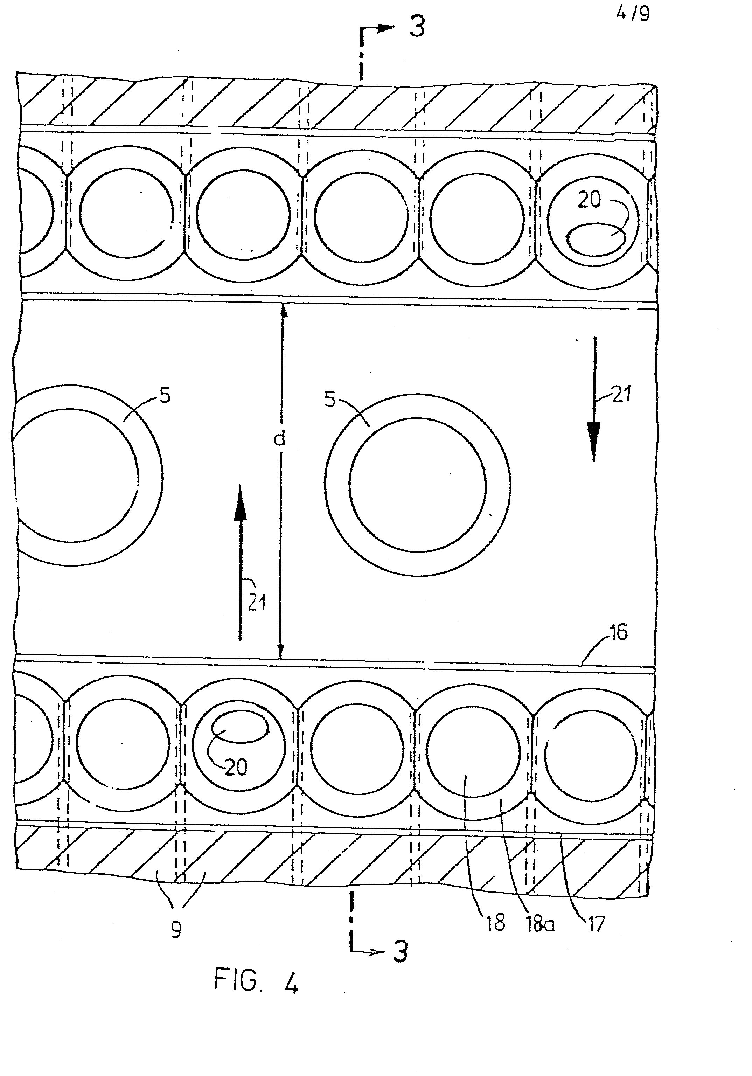

Figur 4 stellt einen Schnitt entsprechend Linie 4 - 4
in Figur 3 dar, wobei der Austritt der Treibstrahlen 18
von oben dargestellt   ist. Die Darstellung zeigt die
Ausführungsform einer schlitzförmigen Ziehdüse im Ausschnitt. Die Treibstrahldüsen 18 sind gemäß der besonders bevorzugten Ausführungsform der vorliegenden
Erfindung so dicht angeordnet, daß die divergierenden
Teile 18a der Treibstrahldüsen überlappen. Im übrigen
bezeichnen die Zahlen in der Figur analoge Elemente wie
in Figur 3. Zusätzlich sind die Schmelzeaustrittsöffnungen 5 eingezeichnet. Die Pfeile 21 bezeichnen "Querstrahlen", Ziffer 20 die Querstrahldüsen. Ferner sind
durch verdeckte Linien die Treibstrahlzufuhrleitungen 9
angedeutet.

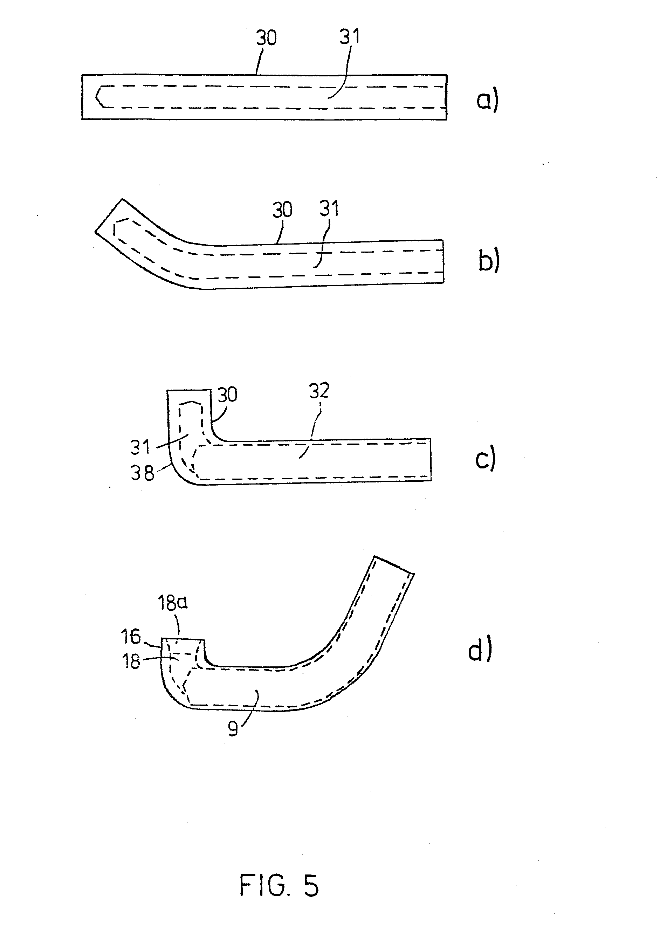

Fig. 5 erläutert ein Herstellungsverfahren für den Einlaufteil der erfindungsgemäßen Ziehdüse. Bei der Herstellung wird von einem Blech 30 von z.B. 2 mm Dicke
ausgegangen (Fig. 5a). In dieses Blech werden parallele
Bohrungen 31 mit dem gewünschten Treibstrahldurchmesser von z.B. 1,0 mm im Abstand von je 1,5 mm zueinander eingebracht. Das Blech wird dann im wesentlichen rechtwinklig (Fig. 5b, Fig. 5c) so umgebogen, daß die Einlaufkontur 38 entsteht. Beim Umbiegen können die Bohrungen 31 z.B. mit Feinsand, gegebenenfalls mit einem organischen Bindemittel, ausgefüllt werden. Nach dem Umbiegen können die Bohrungen 31 mit Treibstrahldüsendurchmesser zur Ausbildung von Treibstrahlzufuhrleitungen, z.B. auf 1,3 mm, aufgebohrt werden (Ziffer 32). Das Blech wird dann spanabhebend bearbeitet und der Erweiterungsteil 18a der Treibstrahldüse 18 ausgebildet. Der Erweiterungsteil 18a erhält dabei einen Austrittsradius von 1,6 mm, so daß die einzelnen Austrittsteile der Treibstrahldüsen überlappen. Das Blech wird dann am anderen Ende umgebogen und in das Teil, das die Treibgasleitung 19 (Fig. 1) enthält, eingeschweißt.

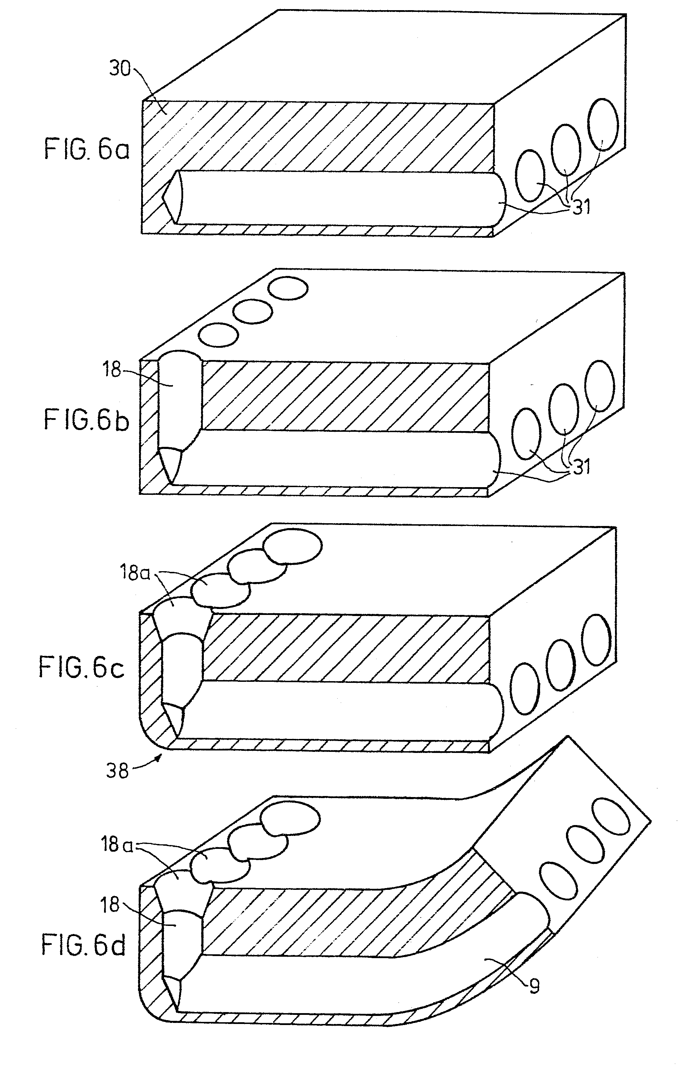

Eine andere Herstellungsmöglichkeit für den Einlaufteil der Ziehdüse ist in Fig. 6 dargestellt. Es wird wieder von einem Blech 30 ausgegangen, das eine Dicke aufweist, die der gewünschten Länge des Einlaufteils entspricht, z.B. 2,5 mm. Im Abstand von 1,0 mm von der Oberkante des Blechs werden Bohrungen 31 mit dem Treibstrahlzufuhrleitungsdurchmesser von 1,6 mm eingebracht (Fig. 6a). Die Bohrungen 31 weisen einen Abstand von 1,8 mm auf. Danach werden (Fig. 6b) die Treibstrahlbohrungen 18 mit einem Durchmesser von 1,1 mm eingebracht. Der Erweiterungsteil 18a erhält einen Austrittsdurchmesser von 1,9 mm. Ferner wird die Einlaufkontur 38 dargestellt (Fig. 12c). Durch Umbiegen des anderen Endes wird die Krümmung der Treibstrahlzufuhrleitungen 9 (wie in Fig.1) erreicht.

Le A 22 071

Das erfindungsgemäße Zerfaserungsverfahren wird nun so betrieben, daß die Ziehdüse 2 sich zunächst einige Zentimeter oberhalb der Oberseite des Vorherdes 1 befindet. Die Treibgasleitungen 19 werden mit einem Druck von 10 - 12 bar beaufschlagt. Das Treibgas tritt durch die Treibgasdüsen 18 in den Ausziehteil mit Geschwindigkeiten von 1,5 - 3facher Schallgeschwindigkeit ein, und erzeugt im Ausziehteil 7 einen Unterdruck von 0,2 bis 0,4 bar. Durch den Unterdruck wird in den Einlaufteil 6 der Ziehdüse Umgebungsluft eingesaugt. Die Ziehdüse wird danach auf wenige Millimeter an die Steigkanaloberkante herangefahren, so daß sich an den Schmelzeaustrittsöffnungen 5 ein Druck von ca. 0,94 - 0,95 bar ausbildet. Auf Grund der Druckdifferenz zwischen Gasraum im Vorherd 1 und an der Schmelzeaustrittsöffnung 5 wird die Schmelze im Steigkanal angehoben, wo sie in Form von durch die Einlaufgasströmung beschleunigten Schmelzefäden 11 (Fig. 3) in den Einlaufteil 6 der Ziehdüse 2 eingezogen wird und auf Grund des starken Druckgefälles im Ziehdüseneinlauf etwa am Zerfaserungspunkt Z in eine Vielzahl von Sekundärfäden 12 aufgespalten wird. Die Sekundärfäden 12 werden unter weiterer Beschleunigung durch die Überschallausziehgasströmung zum gewünschten Faserdurchmesser ausgezogen. Die Geschwindigkeit der Faser/Gas-Dispersion wird im Diffusor 70 reduziert und tritt danach in die Atmosphäre aus. Oberhalb des Diffusors ist dann in bekannter Weise ein perforiertes Transportband angeordnet, wobei oberhalb des Transportbandes das Gas abgesaugt wird, so daß die Fasern unterhalb des Transportbandes

Le A 22 071

gesammelt werden. Mittlere Dicke und Länge der Fasern werden über den Durchmesser der Schmelzeaustrittsöffnungen 5 des Steigrohres 4 sowie den Druck in der Treibgasleitung 19 beeinflußt.

Gemäß einer weiteren Ausgestaltung ist der Steigkanal 4 (Fig. 1,2) fest mit der Ziehdüse 2 über seitliche Halterungen, die die Einlaufströmung nicht stören, verbunden. Bei Unterbrechung des Zerfaserungsprozesses wird dann die Ziehdüse 2 gemeinsam mit dem Steigkanal 4 angehoben. Bei dieser Ausgestaltung der Erfindung wird bei Betriebsunterbrechungen die gegenseitige Justierung von Ziehdüse und Steigkanal nicht geändert. Vorzugsweise weist dann der Steigkanal im unteren Teil seitliche Bohrungen auf, die im Betrieb unterhalb der Schmelzeoberfläche sind. Die Anhebung bei Betriebsunterbrechung erfolgt dann bis in eine solche Höhe, daß die Bohrungen aus der Schmelze auftauchen, die Unterkante des Steigkanals jedoch in die Schmelze eingetaucht bleibt.

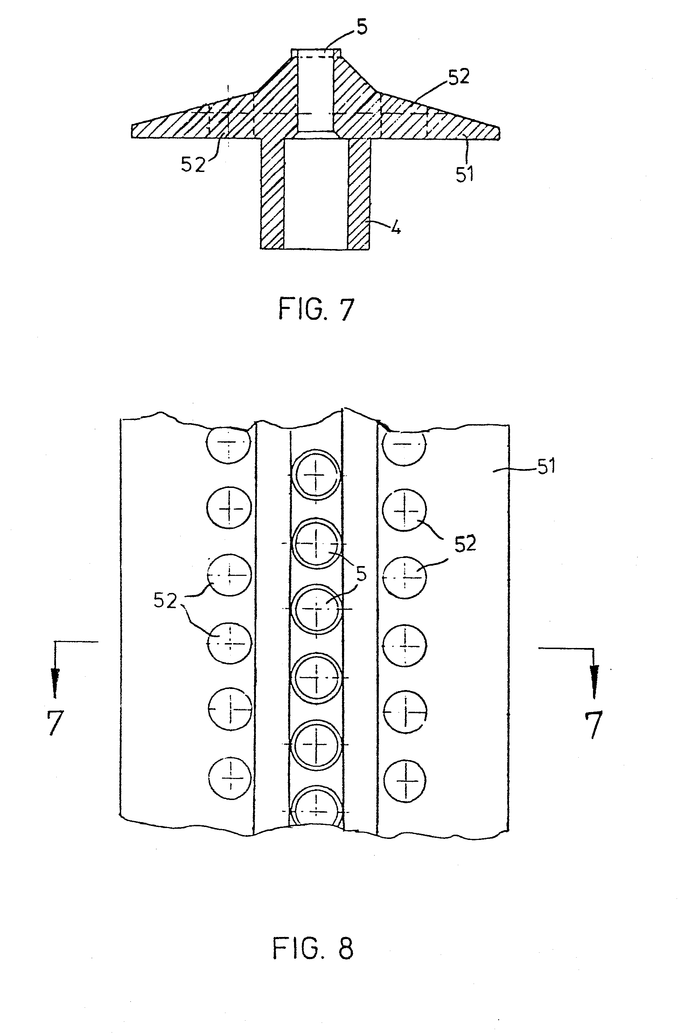

Besonders bevorzugte Ausführungsformen der vorliegenden Erfindung nutzen die Wärme der im Gasraum über der Schmelze 3 befindlichen heißen Flammengase zur Beheizung der Oberseite des Steigkanals 4. Solche bevorzugten Ausführungsformen sind in Figuren 7 bis 10 dargestellt.

Figur 7 zeigt einen Querschnitt durch den Oberteil des Steigkanals 4 entsprechen Pfeilen 7-7 in Figur 8. Figur 8 stellt eine Aufsicht auf den Steigkanal dar. Das

Le A 22 071

Halte- und Befestigungsteil 51 des Steigkanals ist als Profil zur Gewährleistung einer größeren Stabilität ausgebildet. Die Schmelzeaustrittsöffnungen 5 sind in Form von Düsennippeln ausgebildet. Ferner sind beidseitig des Steigkanals 4 Bohrungen 52 vorgesehen, durch die heiße Flammengase aus dem Gasraum über der Schmelze austreten. Die heißen Flammengase schützen einerseits die Düsennippel 5 vor Abkühlung durch die Einlaufströmung in die Ziehdüse. Andererseits führt die Vermischung der durch die Öffnungen 52 austretenden heißen Gase mit der eingesaugten Umgebungsluft zu einer Erhöhung der mittleren Temperatur der Einlaufströmung. Gase höherer Temperaturen weisen aber eine höhere Schallgeschwindigkeit auf. Daher werden im Einlaufteil 6 der Ziehdüse Schallgeschwindigkeiten von bis zu 500 m pro Sekunde erreicht.

Die Bohrungen 52 werden daher vorzugsweise so gestaltet, daß die Einlaufströmung eine Temperatur von 350 - 450°C nach der Vermischung des Heißgases mit der Umgebungsluft aufweist.

Die Heißgasbohrungen 52 sind ferner vorzugsweise auf Lücke gegen die Schmelzeaustrittsöffnungen 5 versetzt, so daß sich in der Einlaufströmung ausbildende Heißgasschlieren von den Querstrahlen 21 (Fig. 4) getroffen werden, so daß eine gute Vermischung der Einlaufströmung erreicht wird.

Le A 22 071

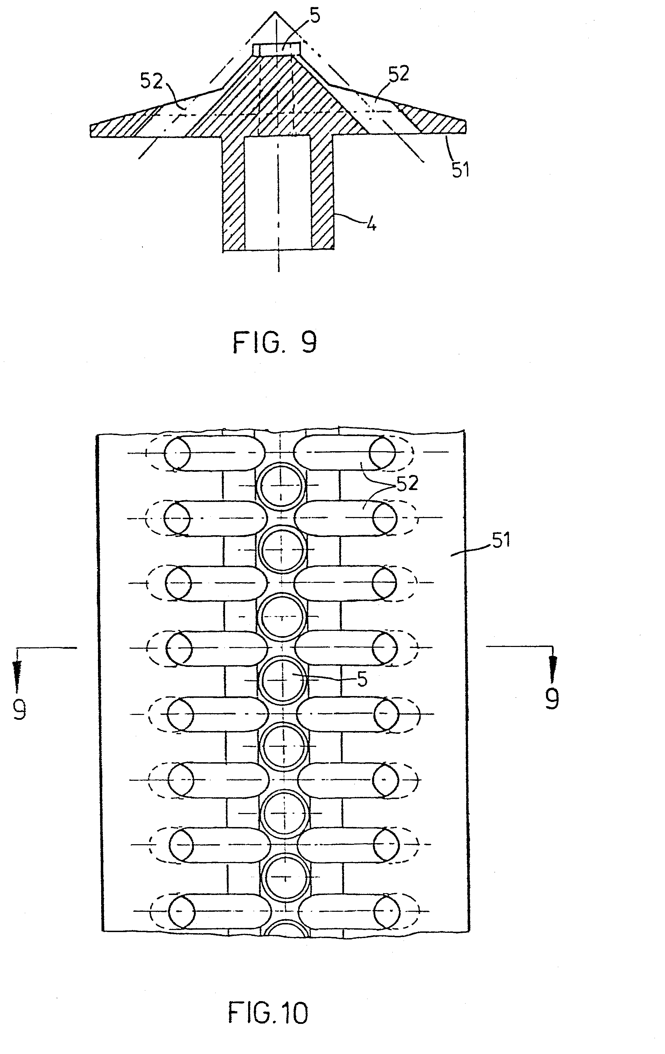

Eine erfindungsgemäß verbesserte Ausgestaltung des Oberteils des Strömungskanals 4 ist in Fig. 9 und 10 dargestellt, wobei Fig. 10 eine Aufsicht auf den Strömungskanal 4 und Fig. 9 einen Querschnitt entsprechend Pfeil 9-9 in Fig. 10 darstellt. Die Heißgasbohrungen 52 sind jeweils schräg zur Mittelebene des Steigkanals 4 ausgebildet, so daß sie etwa einen rechten Winkel zueinander bilden.

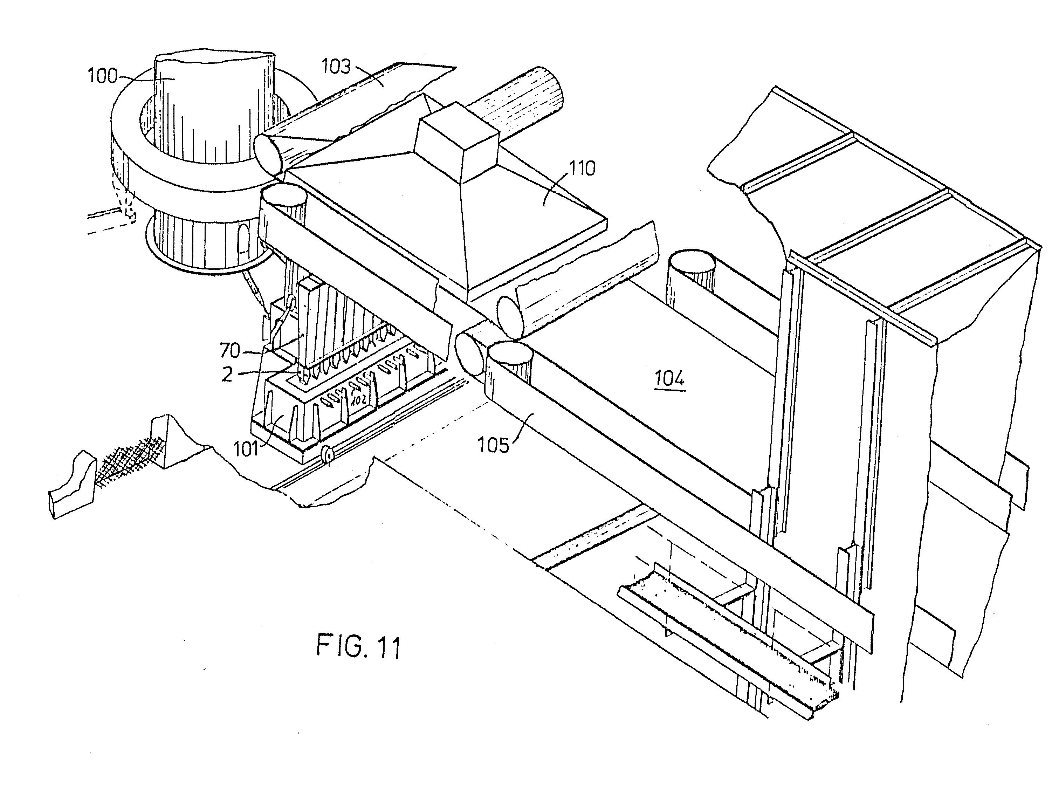

Figur 11 zeigt die Gesamtansicht eines industriellen Herstellungsprozesses nach der Erfindung. Im Kupolofen 100 wird eine Basaltschmelze erschmolzen und in den Vorherd 101 gefördert. Der Vorherdkanal ist durch Gasbrenner 102 beheizt. Oberhalb des Vorherdkanals sind eine Vielzahl von Ziehdüsen 2 parallel angeordnet. Die Ziehdüsen münden in Diffusoren 70. Die aus den Diffusoren 70 nach oben austretende Faser/Gas-Dispersion wird unter dem perforierten Transportband 103 unter Absaugung des Gases in der Absaugvorrichtung 110 getrennt, wobei sich unterhalb des Transportbandes die Fasermatte bildet. Das Transportband 103 fördert die Matte zur Übergabe auf das Transportband 104. Daran schließen sich die üblichen weiteren Verarbeitungsschritte an.

Patentansprüche

1. Verfahren zur Zerteilung von Schmelzen in Blasdüsen, wobei die Schmelze aus einem Schmelzereservoir unter der Saugwirkung der Blasdüse von der
Schmelzeoberfläche abgehoben und unter der Wirkung von im wesentlichen entgegen der Schwerkraft
strömendem Gas zerteilt wird, dadurch gekennzeichnet, daß die Schmelze in einem Steigkanal angehoben
wird, die Schmelze durch eine Vielzahl von an der
Steigkanaloberseite vorgesehenen, nebeneinander
angeordneten Öffnungen in eine Vielzahl von
Schmelzeströmen aufgeteilt und in die Ziehdüse
eingezogen wird, wobei die Druckdifferenz zum Anheben der Schmelze im Steigkanal und Einziehen in
die Ziehdüse durch die zwischen Steigkanaloberseite und Ziehdüsenunterseite bewirkte Einlaufströmung in die Ziehdüse erzeugt wird.

2. Verfahren nach Anspruch 1, dadurch gekennzeichnet,
daß die Steigkanaloberseite beheizt wird.

3. Verfahren nach Anspruch 1 oder 2, dadurch gekennzeichnet, daß die Beheizung der Steigkanaloberseite durch heiße Flammengase bewirkt wird, die
aus dem Gasraum über der Schmelzeoberfläche im
Schmelzereservoir an der Steigkanaloberseite ausströmen.

Le A 22 071

4. Verfahren nach einem der Ansprüche 1 bis 3, dadurch gekennzeichnet, daß eine Mineralschmelze zerfasert wird.

5. Verfahren nach einem der Ansprüche 1 bis 4, dadurch gekennzeichnet, daß die Einlaufströmung in die Ziehdüse durch innerhalb der Ziehdüse durch Treibstrahldüsen erzeugte Überschalltreibstrahlen erzeugt wird.

6. Verfahren nach einem der Ansprüche 1 bis 5, dadurch gekennzeichnet, daß durch Gestaltung des Einlaufteils der Ziehdüse in diesem ein Druckabfall von mindestens 0,3 bar auf maximal 0,5 mm Länge erzeugt wird.

7. Verfahren nach einem der Ansprüche 1 bis 6, dadurch gekennzeichnet, daß die Mineralschmelze im Kupolofen erschmolzen wird.

8. Vorrichtung zur Zerfaserung von Schmelzen, bestehend aus einem Schmelzereservoir, mindestens einer im wesentlichen entgegen der Schwerkraft wirkenden Blasdüse, sowie mit der Blasdüse zusammenwirkenden Mittels zur Ausbildung einer Vielzahl einzelner, in die Blasdüse eintreten Schmelzefäden, gekennzeichnet, durch einen sich von der Schmelzeoberfläche entgegen der Schwerkraft erstreckenden Steigkanal, der auf seiner Oberseite eine Vielzahl von nebeneinander angeordneten Schmelzeaustrittsöffnungen aufweist, sowie Mittel

Le A 22 071

zur Erzeugung einer solchen Gasströmung zwischen Steigkanaloberseite und Ziehdüsenunterseite, daß die Schmelze aus dem Schmelzereservoir durch die Öffnungen der Steigkanaloberseite in Form von einzelnen Schmelzeströme förderbar ist.

Le A 22 071

FIG. 1

FIG. 2

FIG. 3

FIG. 4

FIG. 5

FIG. 6a

30

31

FIG.6b

18

31

FIG.6c

18a

38

FIG.6d

18a

18

9

FIG. 7

FIG. 8

FIG. 9

FIG.10

FIG. 11

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | US-A-2 588 690  (I.W. ARCHIBALD) <br> * Ansprüche 1-4, 9; Spalte 3, Zeilen 65-75; Spalte 4, Zeilen 1-6, 27-30, 53-59; Figur 2 * | 1-5,8 | C 03 B  37/06 |
| | --- | | |
| A | US-A-2 235 352  (H.C. BATES) <br> * Ansprüche 1-7, 9, 12; Figur 1 * | 1-5,8 | |
| | --- | | |
| D,A | DE-B-1 213 579  (J. DESPRES et al.) <br> * Anspruch 1; Figur 2 * | 1 | |
| | --- | | |
| D,A | DE-C- 731 087  (MIJ TOT BEHEER EN EXPLOITATIE VAN OCTROOIEN) <br> * Ansprüche 1, 3; Abbildung 1 * | 1-3 | |
| | ----- | | |

| RECHERCHIERTE SACHGEBIETE (Int. Cl. ³) |
|---|
| C 03 B  37/02 <br> C 03 B  37/06 |

Der vorliegende Recherchenbericht wurde für alle Patentansprüche erstellt.

| Recherchenort | Abschlußdatum der Recherche | Prüfer |
|---|---|---|
| BERLIN | 13-06-1984 | STROUD J.G. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82